# EUROPEAN PATENT APPLICATION

(11) **EP 4 592 824 A1**
(43) Date of publication of application: **30.07.2025**
(21) Application number: 24153959.2
(22) Date of filing: 25.01.2024
(51) Int. Cl.: G06F 8/30, G06F 8/36, G06F 9/445, G05B 19/042, G06F 8/38, G06F 8/60

(54) **METHOD AND SYSTEM FOR AUTOMATIC GENERATION OF ADD-IN PROGRAMS IN ENGINEERING SYSTEM**

(71) Applicant: Siemens Aktiengesellschaft, 80333 München (DE)
(72) Inventor: Dachepalli, Pratap Simha, 508213 Suryapet, Telangana (IN); M R, Harshitha, 560085 Bangalore, Karnataka (IN)
(74) Representative: Isarpatent

(57) **Abstract**

The present invention provides a method and system for automatically generating an add-in program for an engineering system. The method comprises receiving, by a processing unit (202) a first user action from a user. The first user action is associated with at least one engineering object of a plurality of engineering objects in the engineering system. The method further comprises predicting, by the processing unit (202), at least a second user action by implementation of a user action detection procedure on the first user action and a knowledge graph associated with the engineering system. The method further comprises generating, by the processing unit (202), a sequence of user actions, by implementation of a sequence identification procedure on the received first user action, and the predicted at least one second user action. The method further comprises generating, by the processing unit (202), an add-in program by implementation of an add-in generation procedure on the generated sequence of user actions. The method further comprises deploying, by the processing unit (202), the generated at least one add-in program in the engineering system.

## Description

The present invention relates to a field of industrial automation, and more particularly relates to a method and system for automatically generating an add-in program for an application program in an engineering system.

An application program is configured to perform a plurality of functions within an engineering system. The plurality of functions includes but is not limited to a project creation function, a device activation function, a device configuration function, and a project deletion function. A user is enabled to input into the application program, a command which is specific to a function to cause the application program to execute the function. The user is enabled to input the command via an input device such as a touch screen, a human machine interface, a computer mouse, or voice based input.

In one example, a sequence of functions has to be performed by the application program, so that a specific objective of the user is achieved. The specific objective of the user may be a purpose or condition which has to be fulfilled in the engineering system to ensure an optimum functioning of the engineering system. In one example, the sequence of functions is referred to as a workflow. In such a case, the user has to input a sequence of commands to cause the application program to perform the sequence of functions. In a case where, the sequence of functions have to be performed repeatedly, the user has to input the sequence of commands repeatedly. In other words, the user has to perform redundant and repetitive actions in order to achieve the specific objective.

In conventional systems, an add-in program is used to remedy the aforementioned problem. An add-in program is a supplemental program that is added into the application program. The add-in program adds custom commands and features into the application program. For example, the add-in program is activated with an input of a single command and furthermore, the add-in program causes the application programs to perform the sequence of functions. Thus, the user is saved from an ordeal of having to input the sequence of commands to cause the application program to perform the sequence of functions. Rather, the user is enabled to enter the single command and thereby cause the application program to perform the sequence of functions.

In existing systems, add-in programs are scripted manually by coders. The coders have to manually identify a set of sequences of functions or workflow which is repeatedly used by a user, and then script the add-in program such that the identified workflow is executed by the add-in program. Thus, a round trip time for a creation and a deployment of the add-in program in the application program is usually large. Furthermore, the workflow comprises information which is confidential to a company which uses the application program. Thus, allowing the coders to peruse such information often results in a breach of a data security policy of the engineering system. Furthermore, the users of the application program do not have necessary knowledge and skill to generate such add-in programs.

Furthermore, in a realm of factory automation, workflows commonly used by each user is different from workflows used by other users of a plurality of users. Thus, the coder has to manually script a plurality of add-in programs such that each add-in program of the plurality of add-in programs is tailor made for each user of the plurality of users. Generating such add-in programs manually for each user of the plurality of users is an expensive, time intensive and potentially impossible endeavor.

In light of above, there exists a need for an efficient and cost effective method and system for automatically generating an add-in program for each user of a plurality of users of an application program running in an engineering system. Therefore, it is an object of the present invention to provide an efficient and cost effective method and system for automatically generating an add-in program for each user of a plurality of users of an application program running in an engineering system.

The object of the invention is achieved by a method for automatic generation of an add-in program in an engineering system.

The engineering system, as referenced herein, comprises a plurality of components and processes. The plurality of components and processes are interconnected and designed to achieve specific technical objectives. In one example, the engineering system is configured to achieve technical objective in a plurality of disciplines, such as mechanical, electrical, software, and power generation. For example, the engineering system may be deployed in diverse fields, including but not limited to manufacturing, telecommunications, transportation, and energy. The term "engineering system" as used herein is intended to encompass a broad spectrum of technical architectures and configurations, ranging from discrete hardware components to complex software-driven platforms, all designed to perform specific functions or tasks within the broader context of engineering applications.

An application program within the engineering system refers to a software component specifically designed to execute a plurality of predefined tasks or functions to cause the engineering system to achieve the specific technical objective. In one example, the application program is implemented as standalone software application. In other examples, the application program comprises integrated modules within a larger software framework. Examples of the application programs include, but is not limited to a control algorithm, a simulation tool, a data processing application, and a user interface. The application program within the engineering system, as described herein, embody tailored software solutions essential for seamless integration and optimal performance of the engineering system.

The engineering system comprises a plurality of engineering objects. An "engineering object" refers to a digital entity that holds a significant role in representation and functionality of the engineering system. The plurality of engineering objects manifest in the application program and the engineering system as graphical and software objects, often appearing as icons or templates within the application program or a graphical user interface of the engineering system. In another example, the engineering objects comprises engineering files and engineering projects which are stored within the engineering system.

Each engineering object is endowed with a distinct identity through a designated name and is associated with a set of properties that define characteristics and behavior of the engineering object within the engineering system. The set of properties encapsulate essential information, allowing users to understand and interact with the engineering object effectively. Users are empowered to engage with the plurality of engineering objects through a Human-Machine Interface (HMI) or other input devices.

The engineering system further comprises a knowledge graph comprising information associated with each engineering object of the plurality of engineering objects. The knowledge graph comprises a plurality of nodes. Each node of the knowledge graph comprises information associated with a specific engineering object of the plurality of engineering objects. In one example, each node of the knowledge graph comprises information associated with a category of engineering objects of a plurality of categories of engineering objects.

The knowledge graph is stored inside a database within the engineering system. The Knowledge Graph seamlessly orchestrates a dynamic network of interconnected nodes, each representing a unique engineering object. Advantageously, the knowledge graph fosters a holistic understanding of the engineering system's intricacies.

In one example, the knowledge graph is implemented as a graph database such as Neo4j. In another example, the knowledge graph is generated based on data models like Apache Jena. The engineering system further comprises one or more application program interfaces which facilitate real-time updates within the plurality of engineering objects of the engineering system. By embracing these implementation strategies, the Knowledge Graph becomes not only a repository of information but a dynamic, user-responsive framework that empowers the engineering community to navigate, understand, and evolve the engineering system with unparalleled efficiency.

The add-in program, as referenced herein, refers to a software component designed to perform a series of predefined functions with a single command, eliminating need for a plurality of users to manually input a sequence of commands. The add-in program is a supplemental program that is added into one of the application program or the engineering system. The add-in program adds custom commands and features into one of the application program or the engineering system. For example, the add-in program is activated with an input of a single command and furthermore, the add-in program causes one of the application program or the engineering system to perform a sequence of functions. In a case where the add-in program does not exist, a user may have had to input a sequence of commands to cause the application program or the engineering system to execute the sequence of functions. Thus, advantageously, the user is saved from an ordeal of having to input a sequence of commands to cause the application program to perform the sequence of functions.

One of the engineering system or the application program is configured to receive a plurality of user inputs continuously from an operator or a user of the engineering system. The plurality of user input comprises one or more commands, one or more text inputs or one or more voice inputs. The plurality of user inputs further comprises a spectrum of interactions, including but not limited to command inputs through graphical user interfaces, parameter adjustments, initiation of simulation scenarios, or any other directive provided by the operator or the user. The plurality of user input is received by the engineering system via an input device such as a human machine interface. The plurality of user inputs, hereinafter referred to as a plurality of user actions, constitute commands initiated by the operator or the user to instruct one of the application program or the engineering system.

Each user action of the plurality of user actions corresponds to a specific command. Upon receiving each user action of the plurality of user actions, one of the engineering system or the application program is triggered to perform a predefined function within the engineering system. The operator or the user is enabled to configure, direct, or modify a behavior of the application program or the engineering system, by use of the plurality of user actions, thereby influencing an overall execution and output of the engineering system. The term "user actions" within the scope of this patent pertains to a dynamic and an interactive nature of a human-machine interface associated with the engineering system. The operator or the user is enabled to exert control and influence over the application program to tailor one or more operations of the application program according to the evolving requirements of an engineering process.

In one example, each user action of the plurality of user actions is identified in the engineering system, with an identifier. The identifier of a user action is a data object which comprises a name of the user action, a purpose of the user action, and one or more code segments associated with the user action. The one or more code segments associated with the user action comprises one or more code statements which is executed by one of the engineering system or the application program, when the user action is received by the engineering system. In one example, the one or more code segments comprise portions of the source code of one of the application program or the engineering system. In another example, the one or more code segments comprises one or more function calls or procedural calls to invoke one or more functions which are scripted into the source code of the application program. In such a case, the one or more functions are executed by the engineering system whenever the user action is received by the engineering system.

The identifier of the user action further comprises a natural language description of the one or more functions which are executed by the engineering system, upon reception of the user action in the engineering system. In other words, the identifier is a crucial data object designed to store information directly linked to one or more user actions received by the engineering system. Furthermore, each identifier is structured to encapsulate further details pertinent to specific user actions, thereby forming a sequence which mirrors a chronological order in which the one or more user actions are received in one of the engineering system or the application program. Thus, a string of identifiers allows for a cohesive representation of user activity in one of the engineering system or the application program. Examples of the identifier include alphanumeric codes based identifiers, timestamp-based identifiers, and security code based identifiers. In one example, the identifier for each user action, is assigned by the engineering system simultaneously with a reception of the user action at the engineering system. In another example, the identifier for each user action is scripted by a coder who has coded the application program. The identifier of the user action may be stored in the engineering system and is referenced by the engineering system when the user action is received by the engineering system.

Each user action of the plurality of user actions is directed toward one or more engineering objects of a plurality of engineering objects of the engineering system. In one example, the plurality of user actions include but is not limited to an assign user action, a rename user action, a reconfigure user action, a create new user action, and a delete user action. In such a case, the assign user action and the rename user action causes the engineering system to assign or modify a name of an engineering object of the engineering system. The reconfigure user action causes the engineering system to adjust one or more configuration settings of the engineering object. The create user action causes the engineering system to create new engineering objects. The delete user action enables the user to selectively remove engineering objects that are no longer relevant or necessary, thus streamlining the engineering system and enhancing its efficiency.

The engineering system further comprises an automation module configured to monitor the continuously received plurality of user actions. In a preferred embodiment, the method comprises determining at least one engineering object, towards which each user action of the plurality of user actions is directed. In other words, the automation module is configured to determine the at least one engineering object associated with the at least one user action. The method further comprises determining, by the processing unit, at least one node of the knowledge graph, wherein the at least one node comprises information associated with the determined at least one engineering object. In one example, the automation module is configured to analyze the plurality of nodes of the knowledge graph by application of a natural language processing algorithm to determine the at least one node of the plurality of nodes of the knowledge graph. The method further comprises updating, by the processing unit, the at least one node. To update the at least one node, the automation module is configured to insert into the at least one node, information associated with the at least one user action. Thus, the knowledge graph comprises information associated with an interrelationship between each user action of the plurality of user actions, and each engineering object of the plurality of engineering objects. Furthermore, each node of the knowledge graph comprises information associated with an engineering object and a list of user actions which were one of performed by one or more users on the engineering object.

The method further comprises monitoring, by the processing unit, an order or sequence in which each user action of the plurality of user actions is received at the engineering system. The automation module is further configured to update the knowledge graph by inserting one or more links between the plurality of nodes of the knowledge graph. The inserted one or more links indicate a sequence in which the plurality of user actions are received by the automation module. In one example, the automation module receives a first user action directed at a first engineering object and then receives a second user action directed at a second engineering object. In such a case, the automation module generates a first node associated with the first engineering object and a second node associated with the second engineering object. The automation module further inserts information associated with the first user action into the first node. The automation module further inserts the information associated with the second user action into the second node. Furthermore, since the second user action is received after the first user action, the automation module generates a link between the first node and the second node. Thus, the knowledge graph comprises information associated with the plurality of engineering objects, the plurality of user actions directed at the plurality of engineering objects, and a sequence in which the plurality of user action is received at the engineering system.

In other words, the knowledge graph comprises a plurality of links. Each link of the plurality of links indicate an order with which a user action and a subsequent user action is received at the engineering system. In one example, the first node comprises information associated with a user action which is received from one or more users of the engineering system. The second node comprises information associated with at least one subsequent user action which is received from the one or more users after a reception of the user action. In such a case, at least one link of the plurality of links connects the first node to the second node of the plurality of nodes of the knowledge graph. The at least one link indicates an order of reception of the user action and the subsequent user action.

The method further comprises receiving, by the processing unit, a first user action from a user of the engineering system. The first user action is directed towards at least one engineering object of a plurality of engineering objects in the engineering system. In one example, the first user action comprises an action of a user clicking a graphical icon associated with the at least one engineering object. In another example, the first user action comprises an action of the user entering a text based command, where the text based command comprises a name of the at least one engineering object. In other words, the first user action comprises one or more portions which comprises information indicative of the at least one engineering object.

The method further comprises predicting, by the processing unit, at least a second user action which could be received from the user, subsequent to the first user action. The processing unit is configured to predict the at least one second user action by implementation of a user action detection procedure on the knowledge graph and the first user action.

In one example, the user action detection procedure, as referenced herein, is a software based procedure configured to anticipate and predict forthcoming user actions within the engineering system. The user action detection procedure operates by meticulously analyzing a stream of the plurality of user actions alongside the knowledge graph that encapsulates historical user interactions. By leveraging advanced algorithms and machine learning techniques, the user action detection procedure discerns patterns, and correlations between the plurality of user actions, thus enabling the procedure to make informed predictions about a next likely user action. Thus, the user action detection procedure has a predictive capability which facilitates proactive system responses and tailored user experiences, enhancing overall efficiency and user satisfaction. The User Action Detection Procedure plays a pivotal role in streamlining user interactions and ensuring a seamless, anticipatory user interface.

To implement the user action detection procedure, the automation module executes a first plurality of steps. In a first step of the first plurality of steps, the automation module is configured to cause the processing unit to analyze the knowledge graph based on the received first user action. In a second step of the first plurality of steps, the automation module causes the processing unit to determine at least one node of the plurality of nodes of the knowledge graph. The at least one node comprises information associated with the at least one engineering object.

In one example, the first user action comprises information associated with an identity of the at least one engineering object. In such a case, the automation module is configured to traverse the knowledge graph, while searching each node of the knowledge graph for information associated with the at least one engineering object. The automation module is configured to traverse the knowledge graph until the one or more nodes, which comprises information about the at least one engineering object, is found. The automation module is configured to traverse the knowledge graph using any of known graph walking techniques.

In a third step of the first plurality of steps, the automation module is further configured to analyze the one or more nodes to determine at least one node which comprises information associated with a previously received user action which matches with the first user action. The previously received user action was received by the engineering system prior to a reception of the first user action. In one example, the automation module is configured to extract a name of the first user action from an identifier associated with the first user action. Furthermore, the automation module is configured to analyze the one or more nodes by searching for the extracted name of the first user action, within the one or more nodes. The determined at least one node comprises information associated with the previously received user action, which has a name which matches with the extracted name of the first user action.

In a fourth step of the first plurality of steps, the automation module is further configured to analyze one or more links associated with the at least one node. The one or more links connect the at least one node to a set of nodes in the plurality of nodes. The set of nodes comprises information associated with a set of previously received user actions which were received by the engineering system after the reception of the previously received user action. The set of nodes further comprises information associated with one or more engineering objects towards which the set of previously received user actions were directed by one or more users. Thus, the automation module is configured to determine the set of previously received user actions which were received by the engineering system after the reception of the previously received user action. Since the previously received user action matches with the first user action, it can be approximately predicted that the user may enter one or more user actions which match with the set of previously received user actions.

In a fifth step of the first plurality of steps, the automation module is configured to analyze the one or more nodes to determine whether the one or more nodes comprises information associated with the at least one engineering object or one or more engineering objects which are related to the at least one engineering object. In a sixth step of the first plurality of steps, the automation module is configured to determine the at least one second user action from the one or more nodes, based on a determination that the one or more nodes comprises information associated with the at least one engineering object or the one or more engineering objects which are related to the at least one engineering object. Advantageously, the at least one second user action is predicted based on the knowledge graph which comprises contextual information associated with the plurality of user actions and the plurality of engineering objects. Thus, the at least one second user action is accurately predicted in line with interrelationships between the plurality of user actions and the plurality of engineering objects. Thus a need to analyze the interrelationship between the plurality of user actions and the plurality of engineering objects and thereby engage in time intensive task of manually coding add-in programs is eliminated.

In one example, the automation module is configured to determine a first node and a second node from the one or more nodes. The first and the second nodes comprises information associated with one of the at least one engineering object or the one or more engineering objects which are related to the at least one engineering object. In such a case, the automation module is configured to determine the at least one second user action from the first node and the second node. For example, the automation module may determine all user actions in the first node and the second node as part of the at least one second user action.

The method further comprises generating, by the processing unit, a sequence of user actions by implementation of a sequence identification algorithm on the first user action and the at least one second user action. The sequence identification algorithm may be a machine learning algorithm such as a KNN classification algorithm. The sequence identification algorithm is configured to cluster the first user action and the at least one user action into the sequence of user actions. In one example, the sequence identification algorithm comprises a neural network such as a deep neural network which is trained to cluster the first user action and the at least one second user action into the sequence of user actions. The neural network is trained by application of a supervised training algorithm on a labelled dataset. The labelled dataset comprises a list of user actions applied on a plurality of engineering objects, and a list of subsequent user actions which may be performed by a user after each user action in the list of user actions.

In another example, the sequence identification algorithm is implemented as computer code which, when executed by a processing unit, causes the automation module to analyze the first user action and the at least one second user action. The computer code is further configured to generate the sequence of user actions. To implement the sequence identification algorithm, the automation module is configured to compare each user action of the first user action and the at least one second user action with a list of user defined user actions. The user defined user actions are user actions which are defined by the user or the operator. The automation module is further configured to employ the identified user actions as trigger points to ascertain the sequence of user actions. For example, the automation module is configured to identify a first type of user action as an initiation point and a second type of user action as a conclusion point. The automation module is further configured to effectively delineate a defined scope between the initiation point and the conclusion point as the sequence of user actions. In other words, the automation module is configured to classify one or more user actions received between the identified initiation point and the identified conclusion point as part of the sequence of user actions. The list of user defined user actions can be generated and modified by the user in accordance with one or more preferences of the user. Thus advantageously, the sequence of user actions generated by the automation module is highly customizable by the user.

For example, the first user action may be a user action such as "a user selecting an engineering object". The first user action is identified as the initiation point. The at least one second user action may be a user action such as "the user unselecting the engineering object". The at least one second user action is identified as the conclusion point. Thus, the one or more user actions performed by the operator or the user on between the selection and the un-selection of the engineering object is determined as the sequence of user actions.

The automation module is further configured to generate a workflow template based on the generated sequence of user actions. The workflow template comprises the generated sequence of user actions and also one or more parameters associated with each user action of the sequence of user actions. The one or more parameters associated with each user action comprises numerical variables, and textual data which is entered by the user via the user action. For example, the one or more parameters comprises information about an intensity, a magnitude, or a level and a timing associated with the user action. The workflow template is stored as a data object within the engineering system. In one example, the workflow template is indicative of a specific path within the knowledge graph. The specific path connects a group of nodes within the knowledge graph, where the group of nodes comprises information associated with user actions in the generated set of user actions. In a case where the engineering system receives a stream of user actions, the automation module is configured to compare each user action in the stream of user actions with each user action in the workflow template.

The automation module is further configured to determine that a specific user action of the stream of user actions matches with at least one user action of the workflow template. In a case where the specific user action matches with the at least one user action, the automation module is configured to record one or more subsequently received user action as a string of user actions. Consequently, the automation module is further configured to determine a plurality of strings of user actions.

The automation module is further configured to compare each user action of the plurality of user actions with the generated sequence of user actions. The automation module is further count a number of times that, a majority of user actions of each string of the plurality of strings, matches with user actions of the workflow template. In other words, the automation module counts the number of times that the specific path associated with the workflow template is traversed by the automation module.

The automation module is further configured to compare the counted number of times with a threshold number. In a case where the number of times exceeds the threshold number, the automation module is configured to implement an add-in generation procedure on the generated sequence of user actions. In a case where the number of times does not exceed the threshold number, then the automation module prevents the generation of the add-in program. Advantageously, the add-in program is only created when the sequence of user actions are repeatedly used by the user. Thus, the add-in programs generated are useful for the user.

The automation module is further configured to optimize the workflow template and the generated sequence of user actions by application of a user action optimization algorithm on the workflow template and the plurality of user actions. In one example, the user action optimization algorithm is machine learning algorithm which is configured to identify common user actions within each string of the plurality of strings of user actions. The automation module 112 is further configured to optimize the workflow template based on the identified common user actions. In one example, the automation module 112 is configured to optimize the workflow template and the generated sequence of user actions by application of any of the known Term Frequency-Inverse Document Frequency algorithms on the plurality of strings of user actions. In another example, the automation module is further configured to optimize the generated sequence of user actions by application of a K-means classification algorithm on the plurality of strings of user actions. In one example, the automation module 112 is configured to optimize the workflow template by pruning all user actions from the generated sequence of user actions, except for the identified common user actions. Advantageously, the generated sequence of user actions only comprises the common user actions identified from the plurality of strings of user actions.

The automation module further causes the processing unit to generate an add-in program 108N by implementation of the add-in generation procedure on the generated sequence of user actions. To implement the add-in generation procedure, the processing unit is configured to execute a second plurality of steps.

In a first step of the second plurality of steps, the processing unit is configured to receive one or more user actions from the user in a specific time interval. In a second step of the second plurality of steps, the processing unit compares each user action of the received one or more user actions with a specific user action of the generated sequence of user actions. In a third step of the second plurality of steps, the processing unit is configured to determine a count of times in which the received one or more user actions matches with the generated sequence of user actions. In a fourth step of the second plurality of steps, the processing unit determines that the determined count of times is greater than a threshold number. In a case where the determined count of times is greater than the threshold number, the processing unit extracts a string of identifiers from the generated sequence of user actions. The string of identifiers are data objects which comprise information associated with each user action of the generated sequence of user actions. In the fifth step of the second plurality of steps, the processing unit extracts one or more code segments from the extracted string of identifiers. In a sixth step of the second plurality of steps, the processing unit generates the add-in program by implementation of a string concatenation procedure on the one or more code segments. The string concatenation procedure may be any known algorithm used to concatenate strings.

Advantageously, the automation module automatically the sequence of user actions which are frequently used by the user or the operator.

In a seventh step of the second plurality of steps, the processing unit is configured to extract, from the string of identifiers, a natural language description of each user action in the generated sequence of user actions. In an eight step, the processing unit is configured to generate a natural language description for the generated add-in program by implementation of the string concatenation procedure on the extracted natural language description of each user action in the generated sequence of user actions. Advantageously, the add-in program is automatically generated without manual intervention. Furthermore, the add-in program is generated based on the one or more sequences determined specifically for the user.

The method further comprises displaying, by the processing unit, information associated with the generated add-in program to the user or the operator. The displayed information associated with the generated at least one add-in program comprises the natural language description of the add-in program. The displayed information further includes the natural language description of each user action in the generated sequence of user actions. The displayed information further comprises information associated with the one or more code statements extracted from the string of identifiers. The displayed information further comprises one or more user commands which can be used to invoke the generated at least one add-in program. In one example, the one or more user commands may be a text based command, a voice based command, a gesture based command, or a mouse click based command. Advantageously, the automation module learns from continuously received user actions from the user and provides recommendations to the user to optimize the user's effort.

The method further comprises comparing, by the processing unit, the generated sequence of user actions with a set of sequences of user actions. The set of sequences of user actions comprises user actions which are stored for reference in a database. Each sequence of the set of sequences of user actions is linked to a set of add-in programs which are stored in the database. A plurality of mappings between the set of add-in programs and each sequence of the set of sequences of user actions may be assigned by the user or the operator. The method further comprises determining, by the processing unit, whether a sequence, of the set of sequences, matches with the generated sequences of user actions. In a case where at least one sequence, of the set of sequences, matches with the generated sequence of user actions, the processing unit is configured to determine from the set of add-in programs, the add-in program which is linked to the generated sequence of user actions. The method further comprises displaying, by the processing unit, the determined add-in program to a user. In a case where the sequence does not match with the determined one or more sequences of user actions, the processing unit is configured to deploy the generated one add-in program into the engineering system.

The object of the present invention is also achieved by an engineering system for automatically generating an add-in program for an engineering system. The engineering system comprises a processing unit and a memory coupled to the processing unit. The memory comprises an automation module stored in the form of machine-readable instructions executable by the processor. The automation module is configured for performing the method as described above.

The object of the present invention is also achieved by an industrial environment. The industrial environment comprising an engineering system, a industrial plant comprising one or more physical components and a plurality of human machine interfaces communicatively coupled to the engineering system and the industrial plant. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment ca-pable of automatically generating an add-in program for an engineering system, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4: is a process flowchart illustrating an exemplary method of automatic generation of add-in programs, according to an embodiment of the present invention;
- FIG 5: is an exemplary illustration of functioning of an automation module configured for automatic generation of add-in programs, according to an embodiment of the present invention; and
- FIG 6: is an exemplary illustration of functioning of a user action optimization procedure, according to an embodiment of the present invention;

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

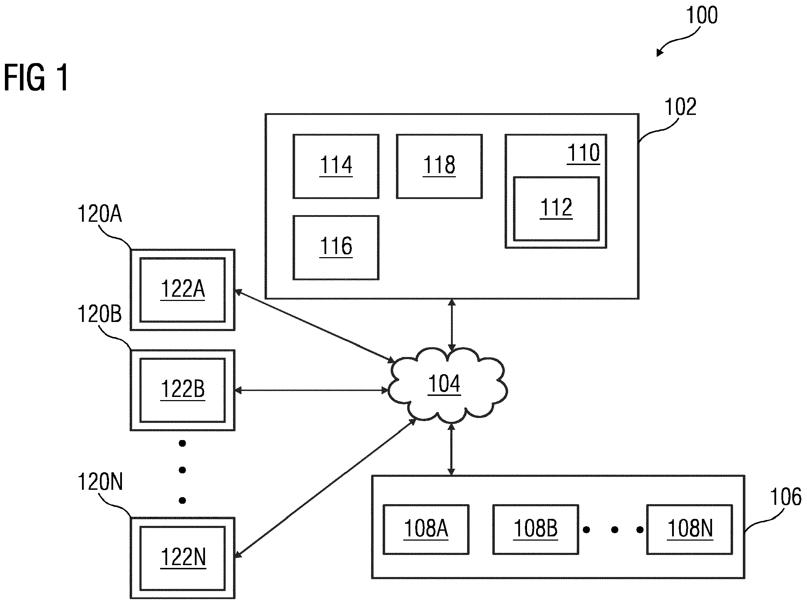

FIG 1 is a block diagram of an industrial environment 100 capable of automatically generating an add-in program for an engineering system 102, according to an embodiment of the present invention. In FIG 1, the industrial environment 100 includes the engineering system 102, and a plurality of human machine interfaces 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the via a network connection 104 (such as Local Area Network (LAN), Wide Area Network (WAN), Wi-Fi, Internet, any short range or wide range communication). The engineering system 102 is also connected to the plurality of human machine interfaces 120A-N via the network connection 104.

The engineering system 102, as referenced herein, comprises a plurality of components and processes. The plurality of components and processes are interconnected and designed to achieve specific technical objectives. In one example, the engineering system 102 is configured to achieve technical objective in a plurality of disciplines, such as mechanical, electrical, software, and power generation. For example, the engineering system 102 may be deployed in diverse fields, including but not limited to manufacturing, telecommunications, transportation, and energy. The term "engineering system" as used herein is intended to encompass a broad spectrum of technical architectures and configurations, ranging from discrete hardware components to complex software-driven platforms, all designed to perform specific functions or tasks within the broader context of engineering applications.

An application program within the engineering system 102 refers to a software component specifically designed to execute a plurality of predefined tasks or functions to cause the engineering system 102 to achieve a specific technical objective. In one example, the application program is implemented as standalone software application. In other examples, the application program comprises integrated modules within a larger software framework. Examples of the application programs include, but is not limited to a control algorithm, a simulation tool, a data processing application, and a user interface. The application program within the engineering system 102, as described herein, embody innovative and tailored software solutions essential for seamless integration and optimal performance of the engineering system.

The engineering system 102 comprises a plurality of engineering objects. An "engineering object" refers to a digital entity that holds a significant role in the representation and functionality of the engineering system 102. The plurality of engineering objects manifest in the application program and the engineering system 102 as graphical and software objects, often appearing as icons or templates within the application program or a graphical user interface of an engineering domain. In another example, the plurality of engineering objects comprises engineering files and engineering projects which are stored within the engineering system 102.

Each engineering object is endowed with a distinct identity through a designated name and is associated with a set of properties that define characteristics and behavior of the engineering object within the engineering system 102. The set of properties encapsulate essential information, allowing users to understand and interact with the engineering object effectively. Users are empowered to engage with the plurality of engineering objects through a Human-Machine Interface (HMI) or other input devices such as the plurality of human machine interfaces 120A-N.

The engineering system 102 further comprises a knowledge graph comprising information associated with each engineering object of the plurality of engineering objects. The knowledge graph comprises a plurality of nodes. Each node of the knowledge graph comprises information associated with a specific engineering object of the plurality of engineering objects. In one example, each node of the knowledge graph comprises information associated with a type of engineering objects of a plurality of types of engineering objects. The knowledge graph is stored inside a database within the engineering system. The Knowledge Graph seamlessly orchestrates a dynamic network of interconnected nodes, each node representing a unique engineering object. Advantageously, the knowledge graph fosters a holistic understanding of intricacies of the engineering system 102. Furthermore, the knowledge graph comprises information associated with one or more interrelationships between the plurality of engineering objects. The knowledge graph may be manually generated by one or more users and fed into the engineering system 102. In another example, the knowledge graph may be received from a database or an external server.

In one example, the knowledge graph is implemented as a graph database such as Neo4j. In another example, the knowledge graph is generated based on data models like Apache Jena. The engineering system 102 further comprises one or more application program interfaces which facilitate real-time updates within the plurality of engineering objects of the engineering system 102. By embracing these implementation strategies, the Knowledge Graph becomes not only a repository of information but a dynamic, user-responsive framework that empowers a plurality of users to navigate, understand, and evolve the engineering system 102 with unparalleled efficiency.

The engineering system 102 further comprises an application toolbar 106 comprising a plurality of add-in programs 108A-N. The application toolbar 106 is an interactive graphical user interface which serves as a central hub for a plurality of users to access and manage various functionalities of the engineering system 102 seamlessly. The application toolbar 106 comprises a plurality of graphical icons and hyperlinks, which when activated by a user, causes the engineering system 102 to invoke at least one of the plurality of add-in programs 108A-N. Furthermore, the application toolbar 106 is configured to receive keyboard shortcuts and gesture-based interactions, thus empowering users with alternative methods for accessing the one or more functionalities of the engineering system 102. This approach caters to a diverse user base and promotes a more streamlined workflow. In one example, the application toolbar 106 is a programmed object which is programmed using web technologies such as HTML5, CSS3, and JavaScript frameworks.

Each add-in program of the plurality of add-in programs, as referenced herein, refers to a software component designed to perform a series of predefined functions with a single command, eliminating need for a plurality of users to manually input a sequence of commands. Each add-in program is a supplemental program that is added into one of the application program or the engineering system 102. The add-in program adds custom commands and features into one of the application program or the engineering system 102. For example, each add-in program is activated with an input of a single command and furthermore, the add-in program causes one of the application program or the engineering system 102 to perform a sequence of functions. In a case where the add-in program does not exist, a user may have had to input a sequence of commands to cause the application program or the engineering system 102 to execute the sequence of functions. Thus, advantageously, a user is saved from an ordeal of having to input a sequence of commands to cause the application program or the engineering system 102 to perform the sequence of functions.

Although, FIG 1 illustrates the engineering system 102 connected to one industrial plant 106, one skilled in the art can envision that the engineering system 102 can be connected to several industrial plants located at different geographical locations via the network connection 104.

The plurality of human machine interfaces 120A-N may be a desktop computer, laptop computer, tablet, smart phone and the like. Each of the plurality of human machine interfaces 120A-N is provided with an engineering tool 122A-N for controlling the engineering system 102. The plurality of human machine interfaces 120A-N can access the engineering system 102 for automatically generating engineering programs. The plurality of human machine interfaces 120A-N can access cloud applications. Throughout the specification, the terms "human machine interface", "client device" and "user device" are used interchangeably. The plurality of human machine interfaces 120A-N are further configured to receive a plurality of user actions from a plurality of users. The plurality of user actions comprises user inputs, user commands, user gestures, programming instructions, and user passwords.

In one example, the engineering system 102 may be implemented as a standalone server deployed at a control station or may be a remote server on a cloud computing platform. In a preferred embodiment, the engineering system 102 may be a cloud-based engineering system. The engineering system 102 may comprise a digitalization platform 110 (such as a cloud computing platform), an automation module 112, a server 114 including hardware resources and an operating system (OS), a network interface 116 and a database 118. The network interface 116 enables communication between the engineering system 102, the industrial plant 106, and the plurality of human machine interfaces 120A-N.

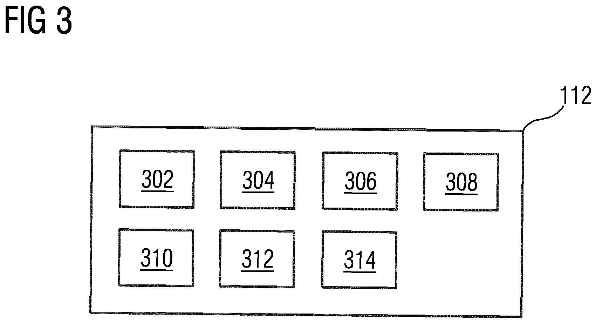

The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. In one example, the digitalization platform 110 may be implemented in the server 114. The digitalization platform 110 enables functionalities such as data reception, data processing, data rendering, data communication, etc. using the hardware resources and the OS of the servers 114 and delivers the aforementioned services using the application programming interfaces deployed therein. The digitalization platform 110 may comprise a combination of dedicated hardware and software built on top of the hardware and the OS. In an exemplary embodiment, the digitalization platform 110 may correspond to an Integrated Development Environment (IDE) comprising program editors and compilers which allow the users of the plurality of human machine interfaces 120A-N to generate engineering programs. The digitalization platform 110 may further comprise the automation module 112 configured for automatically generating at least one add-in program. Details of the automation module 112 is explained in FIG. 3.

The database 118 stores the information relating to the industrial plant 106, the plurality of add-in programs 108A-N, the plurality of human machine interfaces 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the digitalization platform 110. The database 118, according to another embodiment of the present invention, is a location on a file system directly accessible by the automation module 112.

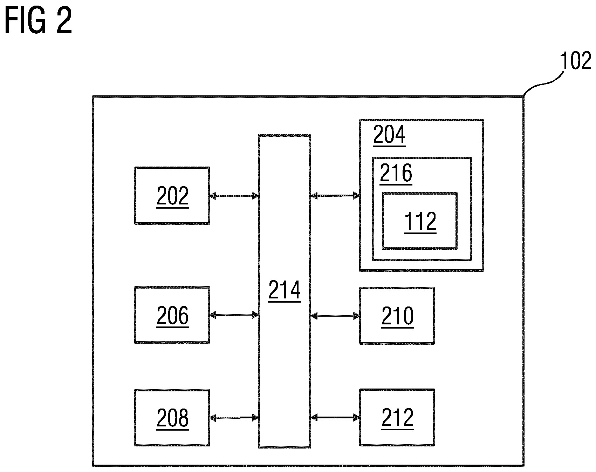

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, a neural processing unit (NPU) or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

In one example, the engineering system 102, as referenced herein, comprises a plurality of components and processes. The plurality of components and processes are interconnected and designed to achieve specific technical objectives. In one example, the engineering system 102 is configured to achieve technical objective in a plurality of disciplines, such as mechanical, electrical, software, and power generation. For example, the engineering system 102 may be deployed in diverse fields, including but not limited to manufacturing, telecommunications, transportation, and energy. The term "engineering system" as used herein is intended to encompass a broad spectrum of technical architectures and configurations, ranging from discrete hardware components to complex software-driven platforms, all designed to perform specific functions or tasks within the broader context of engineering applications.

One of the engineering system 102 or the application program is configured to receive a plurality of user inputs continuously from an operator or a user of the engineering system 102. The plurality of user input comprises one or more commands, one or more text inputs or one or more voice inputs. The plurality of user inputs further comprises a spectrum of interactions, including but not limited to command inputs through graphical user interfaces, parameter adjustments, initiation of simulation scenarios, or any other directive provided by the operator or the user. The plurality of user input is received by the engineering system 102 via an input device such as the plurality of human machine interface 120AN. The plurality of user inputs, hereinafter referred to as a plurality of user actions, constitute commands initiated by the operator or the user to instruct one of the application program or the engineering system 102.

Each user action of the plurality of user actions corresponds to a specific command. Upon receiving each user action of the plurality of user actions, one of the engineering system 102 or the application program is triggered to perform a predefined function within the engineering system 102. The operator or the user is enabled to configure, direct, or modify a behavior of the application program or the engineering system, by use of the plurality of user actions, thereby influencing an overall execution and output of the engineering system. The term "user actions" within the scope of this patent pertains to a dynamic and an interactive nature of a human-machine interface associated with the engineering system. The operator or the user is enabled to exert control and influence over the application program to tailor one or more operations of the application program according to the evolving requirements of an engineering process.

In one example, each user action of the plurality of user actions is identified in the engineering system 102, with an identifier. The identifier of a user action is a data object which comprises a name of the user action, a purpose of the user action, and one or more code segments associated with the user action. The one or more code segments associated with the user action comprises one or more code statements which is executed by one of the engineering system 102 or the application program, when the user action is received by the engineering system. In one example, the one or more code segments comprise portions of the source code of one of the application program or the engineering system 102. In another example, the one or more code segments comprises one or more function calls or procedural calls to invoke one or more functions which are scripted into the source code of the application program. In such a case, the one or more functions are invoked by the engineering system 102 whenever the user action is received by the engineering system 102.

The identifier of the user action further comprises a natural language description of the one or more functions which are executed by the engineering system 102, upon reception of the user action in the engineering system 102. In other words, the identifier is a crucial data object designed to store information directly linked to one or more user actions received by the engineering system 102. Furthermore, each identifier is structured to encapsulate further details pertinent to specific user actions, thereby forming a sequence which mirrors a chronological order in which the one or more user actions are received in one of the engineering system 102 or the application program. Thus, a string of identifiers allows for a cohesive representation of user activity in one of the engineering system 102 or the application program. Examples of the identifier include alphanumeric codes based identifiers, timestamp-based identifiers, and security code based identifiers. In one example, the identifier for each user action, is assigned by the engineering system 102 simultaneously with a reception of the user action at the engineering system 102. In another example, the identifier for each user action is scripted by a coder who has coded the application program. The identifier of the user action may be stored in the engineering system 102 and is referenced by the engineering system 102 when the user action is received by the engineering system 102.

Each user action of the plurality of user actions is directed toward one or more engineering objects of a plurality of engineering objects of the engineering system 102. In one example, the plurality of user actions include but is not limited to an assign user action, a rename user action, a reconfigure user action, a create new user action, and a delete user action. In such a case, the assign user action and the rename user action causes the engineering system 102 to assign or modify a name of an engineering object of the engineering system 102. The reconfigure user action causes the engineering system 102 to adjust one or more configuration settings of the engineering object. The create user action causes the engineering system 102 to create new engineering objects. The delete user action enables the user to selectively remove engineering objects that are no longer relevant or necessary, thus streamlining the engineering system and enhancing its efficiency.

When executed by the processing unit 202, the automation module 112 causes the processing unit 202 to determine an engineering object, towards which at least one user action of the plurality of user actions is directed. In other words, the automation module 112 is configured to determine the engineering object associated with the at least one user action. The automation module 112 further causes the processing unit 202 to determine at least one node of the knowledge graph. The at least one node comprises information associated with the determined engineering object. In one example, the automation module 112 is configured to analyze the plurality of nodes of the knowledge graph by application of a natural language processing algorithm to determine the at least one node of the plurality of nodes of the knowledge graph. It is noted that each node of the plurality of nodes is associated with a specific engineering object and comprises an identity of the specific engineering object. The automation module 112 further causes the processing unit 202 to update the at least one node. To update the at least one node, the automation module 112 is configured to insert into the at least one node, information associated with the at least one user action. Thus, the knowledge graph comprises information associated with an interrelationship between each user action of the plurality of user actions, and each engineering object of the plurality of engineering objects. Furthermore, each node of the knowledge graph comprises information associated with an engineering object and a list of user actions which were one of performed on or directed towards the engineering object.

The automation module 112 further causes the processing unit 202 to monitor an order or sequence in which each user action of the plurality of user actions is received at the engineering system 102. The automation module 112 is further configured to update the knowledge graph by inserting one or more links between the plurality of nodes of the knowledge graph. The inserted one or more links indicate a sequence in which the plurality of user actions are received by the automation module 112. In one example, the automation module 112 receives a first set of user actions directed at a first engineering objects and then receives a second set of user actions directed at a second engineering object. In such a case, the automation module 112 generates a first node associated with the first engineering object and a second node associated with the second engineering object. The automation module 112 further inserts information associated with the first set of user actions into the first node. The automation module 112 further inserts the information associated with the second set of user actions into the second node. Furthermore, since the second set of user actions is received before the first set of user actions, the automation module 112 generates a link between the first node and the second node. Thus, the knowledge graph comprises information associated with the plurality of engineering objects, the plurality of user actions directed at the plurality of engineering objects, and a sequence in which the plurality of user actions is received at the engineering system 102.

In other words, the knowledge graph comprises a plurality of links. At least one link of the plurality of links connects the first node to the second node of the plurality of nodes of the knowledge graph. The first node comprises information associated with a user action which is received from one or more users of the engineering system. The second node comprises information associated with at least one subsequent user action which is received from the one or more users after a reception of the user action.

The automation module 112 further causes the processing unit 202 to receive a first user action from a user of the engineering system 102. The first user action is directed towards at least one engineering object of a plurality of engineering objects in the engineering system 102. In one example, the first user action comprises an action of a user clicking a graphical icon associated with the at least one engineering object. In another example, the first user action comprises an action of the user entering a text based command, where the text based command comprises a name of the at least one engineering object. In other words, the first user action comprises one or more portions which comprises information indicative of the at least one engineering object.

The automation module 112 further causes the processing unit 202 to predict at least a second user action which could be received from the user, after the first user action. The processing unit 202 is configured to predict the at least one second user action by implementation of a user action detection procedure on the knowledge graph and the first user action.

In one example, the user action detection procedure, as referenced herein, is a software based procedure configured to anticipate and predict forthcoming user actions within the engineering system 102. The user action detection procedure operates by meticulously analyzing a stream of the plurality of user actions alongside the knowledge graph that encapsulates historical user interactions. By leveraging advanced algorithms and machine learning techniques, the user action detection procedure discerns patterns, and correlations between the plurality of user actions, thus enabling the procedure to make informed predictions about a next likely user action. Thus, the user action detection procedure has a predictive capability which facilitates proactive system responses and tailored user experiences, enhancing overall efficiency and user satisfaction. The User Action Detection Procedure plays a pivotal role in streamlining user interactions and ensuring a seamless, anticipatory user interface.

To implement the user action detection procedure, the automation module 112 causes the processing unit 202 to execute a first plurality of steps. In a first step of the first plurality of steps, the automation module 112 is configured to cause the processing unit 202 to analyze the knowledge graph based on the received first user action. In a second step of the first plurality of steps, the automation module 112 causes the processing unit 202 to determine at least one node of the plurality of nodes of the knowledge graph. The at least one node comprises information associated with the at least one engineering object.

In one example, the first user action comprises information associated with an identity of the at least one engineering object. In such a case, the automation module 112 is configured to traverse the knowledge graph, while searching each node of the knowledge graph for information associated with the at least one engineering object. The automation module 112 is configured to traverse the knowledge graph until the processing unit 202 determines the one or more nodes which comprises information about the at least one engineering object. The automation module 112 is configured to traverse the knowledge graph using any of known graph walking techniques.

In a third step of the first plurality of steps, the automation module 112 is further configured to analyze the one or more nodes to determine at least one node which comprises information associated with a previously received user action which matches with the first user action. The previously received user action was received by the engineering system 102 prior to a reception of the first user action. In one example, the automation module 112 is configured to extract a name of the first user action from an identifier associated with the first user action. Furthermore, the automation module 112 is configured to analyze the one or more nodes by searching for the extracted name of the first user action, within the one or more nodes. The determined at least one node comprises information associated with the previously received user action. The previously received user action has a name which matches with the extracted name of the first user action.

In a fourth step of the first plurality of steps, the automation module 112 is further configured to analyze one or more links associated with the at least one node. The one or more links connect the at least one node to a set of nodes in the plurality of nodes. The set of nodes comprises information associated with a set of previously received user actions which were received by the engineering system after the reception of the previously received user action. The set of nodes further comprises information associated with one or more engineering objects towards which the set of previously received user actions were directed by one or more users. Thus, the automation module 112 is configured to determine the set of previously received user actions which were received by the engineering system 102 after the reception of the previously received user action. Since the previously received user action matches with the first user action, it can be predicted that the user may enter one or more user actions which match with the set of previously received user actions.

In a fifth step of the first plurality of steps, the automation module 112 is configured to analyze the one or more nodes to determine whether the one or more nodes comprises information associated with the at least one engineering object or one or more engineering objects which are related to the at least one engineering object. In a sixth step of the first plurality of steps, the automation module 112 is configured to determine the at least one second user action from the one or more nodes, based a determination that the one or more nodes comprises information associated with the at least one engineering object or the one or more engineering objects which are related to the at least one engineering object. Advantageously, the at least one second user action is predicted based on the knowledge graph which comprises contextual information associated with the plurality of user actions and the plurality of engineering objects. Thus, the at least one second user action is accurately predicted in line with interrelationships between the plurality of user actions and the plurality of engineering objects. Thus, a need to analyze the interrelationship between the plurality of user actions and the plurality of engineering objects and thereby engage in time intensive task of manually coding add-in programs is eliminated. Furthermore, the at least one second user action is predicted based on interrelationship of the at least one engineering object with other engineering objects of the engineering system 102. Thus, the predicted at least one second user action is aligned with interrelationships between the at least one engineering object with other engineering objects of the engineering system 102.

In one example, the automation module 112 is configured to determine a first node and a second node from the one or more nodes. The first and the second nodes comprises information associated with the at least one engineering object or the one or more engineering objects which are related to the at least one engineering object. In such a case, the automation module 112 is configured to determine the at least one second user action from the first node and the second node. For example, the automation module 112 may determine all user actions mentioned in the first node and the second node as part of the at least one second user action.

The automation module 112 further causes the processing unit 202 to generate a sequence of user actions by implementation of a sequence identification algorithm on the first user action and the at least one second user action. The sequence identification algorithm may be a machine-learning algorithm such as a KNN classification algorithm. The sequence identification algorithm is configured to cluster the first user action and the at least one second user action into the sequence of user actions. In one example, the sequence identification algorithm comprises a neural network such as a deep neural network which is trained to cluster the first user action and the at least one second user action into the sequence of user actions. The neural network is trained by application of a supervised training algorithm on a labelled dataset. The labelled dataset comprises a list of user actions applied on a plurality of engineering objects, and a plurality of sequences of user actions associated with the list of user actions. Each sequence of the plurality of sequences of user actions is associated with a specific user action in the list of user actions. The neural network is thus trained to generate the sequence of user actions from the first user action and the at least one second user action.

In another example, the sequence identification algorithm is implemented as computer code which, when executed by a processing unit, causes the automation module 112 to analyze the first user action and the at least one second user action. The computer code is further configured to generate the sequence of user actions. To implement the sequence identification algorithm, the automation module 112 is configured to compare each user action of the first user action and the at least one second user action with a list of user defined user actions. The user defined user actions are user actions which are defined by the user or the operator. The automation module 112 is further configured to employ the identified user actions as trigger points to ascertain the sequence of user actions. For example, the automation module 112 is configured to identify a first type of user action as an initiation point and a second type of user action as a conclusion point. The automation module 112 is further configured to effectively delineate a defined scope between the initiation point and the conclusion point as the sequence of user actions. In other words, the automation module 112 is configured to classify one or more user actions received between the identified initiation point and the identified conclusion point as part of the sequence of user actions. The list of user defined user actions can be generated and modified by the user in accordance with one or more preferences of the user. Thus, advantageously, the sequence of user actions generated by the automation module is highly customizable by the user.

For example, the first user action may be a user action such as "a user selecting an engineering object". The first user action is identified as the initiation point. The at least one second user action may be a user action such as "the user unselecting the engineering object". The at least one second user action is identified as the conclusion point. Thus, the one or more user actions performed by the operator or the user on between the selection and the un-selection of the engineering object is determined as the sequence of user actions.

The automation module 112 is further configured to generate a workflow template based on the generated sequence of user actions. The workflow template comprises the sequence of user actions and also one or more parameters associated with each user action of the sequence of user actions. The one or more parameters associated with each user action comprises numerical variables, and textual data which is entered by the user via the user action. For example, the one or more parameters comprises information about an intensity, a magnitude, or a level and a timing associated with the user action. The workflow template is stored as a data object within the engineering system 102. In one example, the workflow template is indicative of a specific path within the knowledge graph. The specific path connects a group of nodes within the knowledge graph, where the group of nodes comprises information associated with user actions in the generated set of user actions. In a case where the engineering system 102 receives a stream of user action, the automation module 112 is configured to compare each user action in the stream of user actions with each user action in the workflow template.

The automation module 112 is further configured to determine that a specific user action of the stream of user actions matches with at least one user action of the workflow template. In a case where the specific user action matches with the at least one user action, the automation module 112 is configured to record one or more subsequently received user action as a string of user actions. Consequently, the automation module 112 is further configured to determine a plurality of strings of user actions.

The automation module 112 is further configured to compare each user action of the plurality of user actions with the generated sequence of user actions. The automation module 112 is further count a number of times that, a majority of user actions of each string of the plurality of strings, matches with user actions of the workflow template. In other words, the automation module 112 counts the number of times that the specific path associated with the workflow template is traversed by the automation module 112.

The automation module 112 is further configured to compare the counted number of times with a threshold number. In a case where the number of times exceeds the threshold number, the automation module 112 is configured to implement an add-in generation procedure on the generated sequence of user actions. In a case where the number of times does not exceed the threshold number, then the automation module 112 prevents the generation of the add-in program. Advantageously, the add-in program is only created when the sequence of user actions are repeatedly used by the user.

The automation module 112 is further configured to optimize the workflow template and the generated sequence of user actions by application of a user action optimization algorithm on the workflow template and the plurality of user actions.

In one example, the user action optimization algorithm is machine learning algorithm which is configured to identify common user actions within each string of the plurality of strings of user actions. The automation module 112 is further configured to optimize the workflow template based on the identified common user actions. In one example, the automation module 112 is configured to optimize the workflow template and the generated sequence of user actions by application of any of the known Term Frequency-Inverse Document Frequency algorithms on the plurality of strings of user actions. The automation module 112 is further configured to optimize the generated sequence of user actions by application of a K-means classification algorithm on the plurality of strings of user actions. In one example, the automation module 112 is configured to optimize the workflow template by pruning all user actions from the generated sequence of user actions, except for the identified common user actions. Advantageously, the generated sequence of user actions only comprises the common user actions identified from the plurality of strings of user actions.

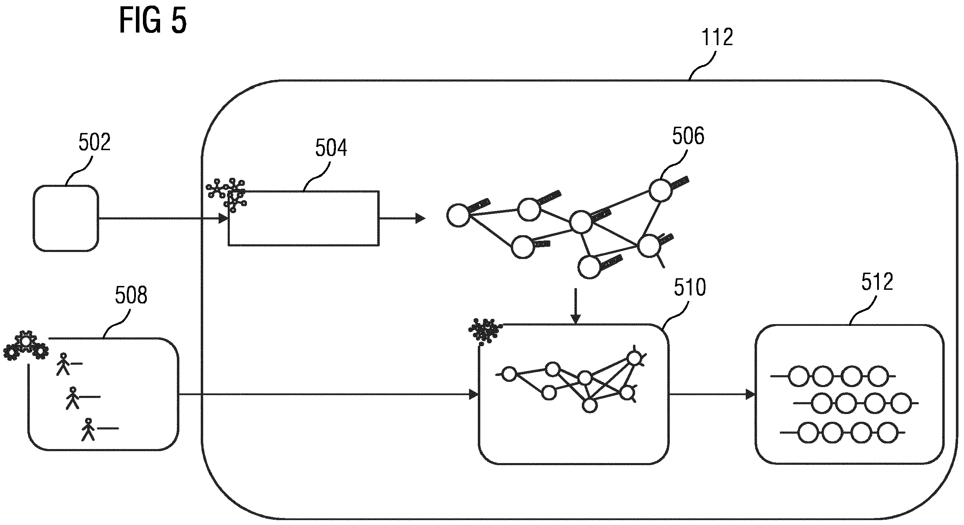

Referring to FIG. 5, a functioning of the automation module 112 is shown. The automation module 112 receives a user action 504 from a user 502. The automation module 112 further receives the plurality of user actions from one or more users 508. The automation module 112 generates a workflow template 510 based on a knowledge graph 506 and the user action 504. The automation module 112 then applies the user action optimization procedure 512 on the generated workflow template 510.

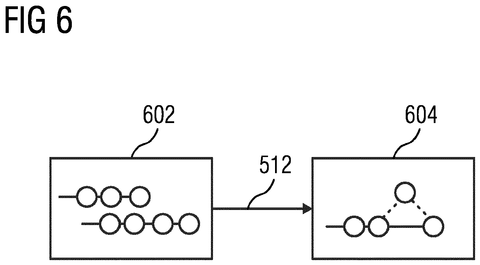

Referring to FIG. 6, a plurality of strings of user actions 602 is used by the user action optimization procedure 512 to generate an optimized workflow template 604.

Referring back to FIG. 2, the automation module 112 further causes the processing unit 202 to generate an add-in program 108N by implementation of the add-in generation procedure on the generated sequence of user actions. To implement the add-in generation procedure the processing unit 202 is configured to execute a second plurality of steps.

In a first step of the second plurality of steps, the processing unit 202 is configured to receive one or more user actions from the user in a specific time interval which occurs after the reception of the first user action. In a second step of the second plurality of steps, the processing unit 202 compares each user action of the received one or more user actions with a specific user action of the generated sequence of user actions. In a third step of the second plurality of steps, the processing unit 202 is configured to determine a count of times in which the received one or more user actions matches with the generated sequence of user actions. In a fourth step of the second plurality of steps, the processing unit 202 determines that the determined count of times is greater than a threshold number. In a case where the determined count of times is greater than the threshold number, the processing unit 202 extracts a string of identifiers from the generated sequence of user actions. The string of identifiers are data objects which comprise information associated with each user action of the generated sequence of user actions. In the fifth step of the second plurality of steps, the processing unit 202 extracts one or more code segments from the extracted string of identifiers. In a sixth step of the second plurality of steps, the processing unit 202 generates the add-in program 108A by implementation of a string concatenation procedure on the one or more code segments. The string concatenation procedure may be any known algorithm used to concatenate strings. In one example, the one or more code segments are concatenated in accordance with an order of user actions in the sequence of user actions.

Advantageously, the automation module automatically identifies the sequence of user actions which are frequently used by the user or the operator. Furthermore, the frequently used sequence of user actions is used to generate the add-in program. Thus, the generated add-in program is configured to execute the generated sequence of user actions which are frequently used and are useful to the user.

In a seventh step of the second plurality of steps, the processing unit 202 is configured to extract, from the string of identifiers, a natural language description of each user action in the generated sequence of user actions. In an eight step, the processing unit 202 is configured to generate a natural language description for the generated add-in program by implementation of the string concatenation procedure on the extracted natural language description of each user action in the generated sequence of user actions. Advantageously, the add-in program 108A is automatically generated without manual intervention. Furthermore, the add-in program 108A is generated based on the one or more sequences determined specifically for the user. Furthermore, the generated add-in program comprises a natural language description of a technical objective or purpose of the generated add-in program. Thus, the user is enabled to make an informed decision on whether to use the generated add-in program or not.

The automation module 112 further causes the processing unit 202 to display information associated with the generated add-in program to the user or the operator. The displayed information associated with the generated at least one add-in program comprises the natural language description of the add-in program. The displayed information further includes the natural language description of each user action in the generated sequence of user actions. The displayed information further comprises information associated with the one or more code statements extracted from the string of identifiers. The displayed information further comprises one or more user commands which can be used to invoke the generated at least one add-in program. In one example, the one or more user commands may be a text based command, a voice based command, a gesture based command, or a mouse click based command. Advantageously, the automation module learns from continuously received user actions from the user and provides recommendations to the user to optimize the user's effort.

The automation module 112 further causes the processing unit 202 to compare the generated sequence of user actions with a set of sequences of user actions. The set of sequences of user actions comprises user actions which are stored for reference in a database. Each sequence of the set of sequences of user actions is linked to a set of add-in programs which are stored in the database. A plurality of mappings between the set of add-in programs and each sequence of the set of sequences of user actions may be assigned by the user or the operator. The automation module 112 further causes the processing unit 202 to determine whether a sequence, of the set of sequences, matches with the generated sequences of user actions. In a case where, at least one sequence of the set of sequences, matches with the generated sequence of user actions, then the processing unit 202 is configured to determine from the set of add-in programs, the add-in program which is linked to the generated sequence of user actions. The automation module 112 is further configured to cause the processing unit 202 to display the determined add-in program to a user. In a case where the sequence does not match with the determined one or more sequences of user actions, the processing unit 202 is configured to deploy the generated at least one add-in program 108A into the application toolbar 106 of the engineering system 102.

The communication interface 208 is configured for establishing communication sessions between the plurality of human machine interfaces 120A-N, the engineering system 102, the spraying device 24 and the imaging device 126.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, plurality of human machine interfaces 120A-N and the industrial plant 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of the automation module 112, such as those shown in FIG 2, in which an embodiment of the present invention can be implemented. In FIG 3, the automation module 112 comprises a request handler module 302, a knowledge graph module 304, an analysis module 306, a modifier module 308, an engineering object database 310, a validation module 312 and a deployment module 314. FIG. 3 is explained in conjunction with FIG. 1 and FIG. 2.

The request handler module 302 is configured for receiving the plurality of user actions from the user or the operator. For example, the plurality of user actions are received from one of the one or more users external to the industrial environment 100 via a network. In alternative embodiment, the plurality of user actions are received from the one or the plurality of human machine interfaces 120A-N via the network.

The knowledge graph module 304 is configured for updating the knowledge graph based on a reception of the plurality of user actions.

The analysis module 306 is configured for applying the sequence identification procedure on one or more user actions to generate the sequences of user actions.

The modifier module 308 is configured for modifying the generated sequence of user action by application of the user action optimization algorithm on the generated sequence of user actions.

The engineering object database 310 is configured for generating an engineering object library comprising the plurality of add-in programs 108A-N.

The validation module 312 is configured to validate the generated at least one add-in program.

The deployment module 314 is configured for deploying the generated add-in program in the engineering system.

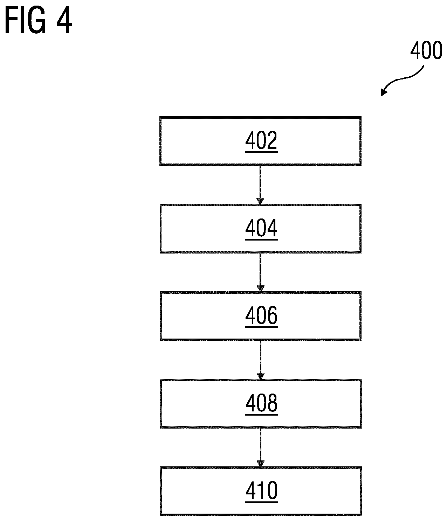

FIG 4 is a process flowchart illustrating an exemplary method 400 of automatically generating an add-in program in the engineering system 102. according to an embodiment of the present invention. FIG. 4 is explained in conjunction with FIGs. 1 to 3.

At step 402, a first user action is recieved by the processing unit 202 from a user. the first user action is associated with at least one engineering object of a plurality of engineering objects in the engineering system. At step 404, at least a second user action is predicted by the processing unit 202 by implementation of a user action detection procedure on the first user action and a knowledge graph associated with the engineering system. At 406, a sequence of user actions is generated by implementation of a sequence identification procedure on the received first user action, and the predicted at least one second user action. At 408, an add-in program is generated by implementation of an add-in generation procedure on the generated sequence of user actions. At step 410, the generated at least one add-in program is deployed by the processing unit 202 in the engineering system.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of references

1. an industrial environment 100
2. an engineering system 102
3. one or more client devices 120A-N
4. a network 104
5.plurality of add-in program 108A-N
6. a platform 110
7. a automation module 112
8. a server 114
9. a network interface 116
10. a database 118
11. a processor(s) 202
12. an accessible memory 204
13. a storage unit 206
14. a communication interface 208
15. an input-output unit 210
16. a network interface 212
17. a bus 214
18. an integrated development environment (IDE) 216
19. a request handler module 302,
20. a neural network remodeller module 304,
21. an analysis module 306,
22. a modifier module 308,
23. a engineering object database 310,
24. a validation module 312
25. a deployment module 314

## Claims

1. A computer-implemented method of automatically generating an add-in program for an engineering system, the method comprising:
receiving, by a processing unit (202), a first user action from a user, wherein the first user action is associated with at least one engineering object of a plurality of engineering objects in the engineering system;
predicting, by the processing unit (202), at least a second user action by implementation of a user action detection procedure on the first user action and a knowledge graph associated with the engineering system;
generating, by the processing unit (202), a sequence of user actions, by implementation of a sequence identification procedure on the received first user action, and the predicted at least one second user action;
generating, by the processing unit (202), an add-in program by implementation of an add-in generation procedure on the generated sequence of user actions; and
deploying, by the processing unit (202), the generated at least one add-in program in the engineering system.

2. The method according to claim 1, wherein the generated sequence of user actions is encapsulated in a workflow template

3. The method according to any of the preceding claims, wherein generating the add-in program further comprises:
optimizing the generated sequence of user actions and the workflow template by implementation of a user action optimization algorithm on the workflow template and the plurality of user actions; and
generating the add-in program by implementation of the add-in generation procedure on the optimized sequence of user actions.

4. The method according to any of the preceding claims,
wherein the knowledge graph comprises a plurality of nodes,
wherein each node of the plurality of nodes comprises information associated with at least one engineering object of the plurality of engineering objects of the engineering system, and
wherein information associated the at least one engineering object of the plurality of engineering objects comprises information associated with one or more user actions performed by one or more users on the engineering object.

5. The method according to any of the preceding claims,
wherein the knowledge graph comprises a plurality of links,
wherein at least one link of the plurality of links connects a first node to a second node of the plurality of nodes,
wherein the first node comprises information associated with a user action which is received from one or more users of the engineering system, and
wherein the second node is comprises information associated with at least one subsequent user action which is received from the one or more users after a reception of the user action.

6. The method according to any of the preceding claims, wherein predicting, the at least one second user action by implementation of a user action detection procedure on the knowledge graph comprises:
determining, by the processing unit (202), at least one node of the knowledge graph by analyzing the knowledge graph and the first user action, wherein the at least one node comprises information associated with the at least one engineering object of the plurality of engineering objects;
analyzing, by the processing unit (202), one or more links associated with the at least one node to determine one or more nodes which are linked to the at least one node, wherein the one or more nodes comprise information associated with a set of user actions; and
predicting, by the processing unit (202), the at least one second user action from the set of user actions by analysis of the one or more nodes.

7. The method according to any of the preceding claims, wherein generating, by the processing unit (202), the add-in program by implementation of the add-in generation procedure on the determined sequence of user actions comprises:
receiving, by the processing unit (202), one or more user actions from the user in a specific time interval;
comparing, by the processing unit (202), the received one or more user actions with at least one user action of the generated sequence of user actions;
determining, by the processing unit (202), that at least one of the received one or more user actions matches with the at least one user action of the generated sequence of user actions; and
determining, by the processing unit (202), that a count of times that the at least one of the received one or more user actions matches with at least one user action of the generated sequence of user actions, is greater than a threshold number.

8. The method according to any of the preceding claims, wherein generating the add-in program further comprises:
extracting, when it is determined that the count is greater than the threshold number, a string of identifiers from the generated sequence of user actions, wherein the string of identifiers are data objects which comprise information associated with each user action of the generated sequence of user actions;
extracting, by the processing unit (202), one or more code segments from the extracted string of identifiers; and
generating, by the processing unit (202), the add-in program by implementation of a string concatenation procedure on the extracted one or more code segments.

9. The method according to any of the preceding claims, further comprising:
extracting from the extracted string of identifiers, by the processing unit (202), a natural language description of each user action of the generated sequence of user actions; and
generating, by the processing unit (202), a natural language description of the generated add-in program by implementation of the string concatenation procedure on the extracted natural language description of each user action of the generated sequence of user actions.

10. The method according to any of the preceding claims, wherein deploying the generated at least one add-in program in the engineering system comprises:
comparing, by the processing unit (202), the generated sequence of user actions with a set of sequences of user actions associated with a set of add-in programs, wherein the set of add-in programs are stored in a database;
determining, by the processing unit (202), whether the generated sequence of user actions matches with a sequence of the set of sequences of user actions;
determining from the set of add-in programs, by the processing unit (202), an add-in program which is associated with the generated sequence of user actions;
displaying, by the processing unit (202), when the generated set of user actions matches with the sequence of the set of sequences of user actions, the determined add-in program to a user; and
deploying, by the processing unit (202), when the add-in program does not match with the generated at least one add-in program, the generated at least one add-in program into the engineering system.

11. An engineering system (102) for automatic generation of an add-in program, wherein the engineering system (102) comprises:
a processing unit (202); and
a memory (204) coupled to the processing unit (202), wherein the memory comprises a automation module (112) stored in the form of machine-readable instructions executable by the one or more processor(s), wherein the automation module (112) is capable of performing a method according to any of the claims 1-10.

12. An industrial environment (100) comprising:
an engineering system (102) as claimed in claim 11;
a industrial plant (106) comprising one or more physical components; and
a plurality of human machine interfaces (120A-N) communicatively coupled to the engineering system (102) via a network (104), wherein the engineering system (102) is configured to perform a method according to any of the claims 1 to 10.

13. A computer-program product, having machine-readable instructions stored therein, that when executed by a processing unit (202), cause the processors to perform a method according to any of the claims 1-10.
